# EUROPEAN PATENT APPLICATION

(11) **EP 2 653 829 A1**
(43) Date of publication of application: **23.10.2013**
(21) Application number: 12164265.6
(22) Date of filing: 16.04.2012
(51) Int. Cl.: G01B 11/16

(54) **Evaluation of a wrinkle defect**

(71) Applicant: Siemens Aktiengesellschaft, 80333 München (DE)
(72) Inventor: Leong, Martin, 9510 Arden (DK)

(57) **Abstract**

The invention concerns a method (Z) and system (39) for evaluation of a wrinkle defect (9) in a fibre reinforced composite workpiece (1, 21a) with a longitunal extension (L) and a cross extension (C) to the longitudinal extension (L) and a thickness (T) which is essentially perpendicular to the longitudinal extension (L) and the cross extension (C), comprising the steps of: capturing (Y) a first image (J₁) of an outer surface of the composite workpiece (1, 21a) along a plane defined by the longitudinal extension (L) and the cross extension (C) in a first state of load (L₁) on the composite workpiece (1, 21a), capturing (X) a second image (J₂) of the outer surface of the composite workpiece (1, 21a) along the same plane in a second state of load (L₂) on the composite workpiece (1, 21a) different from the first state of load (L₁), generating (W) a comparison value (CV) representing a deformation of the composite workpiece (1, 21a) between the first state of load (L₁) and the second state of load (L₂), d) comparing (V) the comparison value (CV) with a set of reference comparison values (PCV) from a database (47), the set of reference comparison values (PCV) representing deformation characteristics of composite structures of the same kind as the composite workpiece (1, 21a), deriving (U) an evaluation value (EV) from the comparison which evaluation value (EV) represents the severity of the wrinkle defect (9) in the composite workpiece (1, 21a).

## Description

The present invention concerns a method and system for evaluation of a wrinkle defect in a fibre reinforced composite workpiece with a longitunal extension and a cross extension to the longitudinal extension and a thickness which is essentially perpendicular to the longitudinal extension and the cross extension.

Wrinkle defects in fibre (e.g. glass fibre) reinforced materials can significantly negatively alter the materials' properties. In particular, they can reduce static and fatigue strengths of such composite structures. Thereby, the effect is highly dependent on the geometric characteristics of the wrinkle defect.

Currently, several inspection methods for inspecting wrinkle defects on fibre reinforced composite workpieces are applied:
Firstly, ultrasonic inspection permits to generate an impression of the inside of such workpiece. However, this technique does not permit to get an indication of the severity of the defect as it does not permit for quantification of measurements.
Secondly, a destructive inspection can be made in which a number of slices or layers of the fibre reinforced material is removed. However, this implies the use of power tools such as an angle grinder which means a certain risk of injury of staff. In addition, the removed (layers of) material is inspected visually, again with no reliable possibility of quantification of measurements: the evaluation of the amount of fibre layers involved in the wrinkle, the wrinkle angle compared to the longitudinal overall fibre alignment direction etc. can easily become arbitrary and thus the conclusions can vary from inpsection staff member to inspection staff member. After the inspection, the area from which the material was removed must be repaired, which means that the injury to the material and the subsequent repair procedure in themselves pose a threat to the material which increases the risks of failure of the workpiece at an earlier stage of its lifetime than otherwise expected.
Thirdly, in particular if it is not possible to perform a destructive inspection, a wrinkle defect can also be evaluated by comparing the height and width of the wrinkle from the (top) surface of the workpiece. However, this method is risky as the wrinkle angle can vary throughout the thickness of the laminate structure of the workpiece.
Thus fourthly, so-called DIC (digital image correlation) inspection can be used: the DIC method is a well-known and widely used for field optical measurement techniques, which allows a user to measure displacements across a large area of a surface, compared to conventional strain gauges. A typical commercial DIC system consists of a number of cameras, a light source and a computer for processing the data generated by the cameras. Generally, the DIC method works by capturing an image of a specimen in an undeformed and another image in a deformed state of the specimen. The software in the computer can then track the movement of the surface between the two images by using pattern recognition algorithms. From the displacements it is possible to calculate the strains and a full-screen strain map of the surface can thus be generated.

This technique has major advantages as to preciseness and reliability in comparison with the previously mentioned techniques.

It is an object of the present invention to further enhance optical measurement of fibre reinforced composite workpieces. Thereby, a particular focus is given to a reliable evaluation of wrinkle defects by optical measurements under different operating conditions such as an operation during or in the aftermath of production of such workpiece and/or of the workpiece in operation conditions.

This object is met by the method according to claim 1 and by a system according to claim 13.

According to the invention, the above-mentioned method is **characterized in that** it comprises the steps of:
a) capturing a first image of an outer surface of the composite workpiece along a plane defined by the longitudinal extension and the cross extension in a first state of load on the composite workpiece,
b) capturing a second image of the outer surface of the composite workpiece along the same plane in a second state of load on the composite workpiece different from the first state of load,
c) generating a comparison value representing a deformation of the composite workpiece between the first state of load and the second state of load,
d) comparing the comparison value with a set of reference comparison values from a database, the set of reference comparison values representing deformation characteristics of composite structures of the same kind as the composite workpiece,
e) deriving an evaluation value from the comparison which evaluation value represents the severity of the wrinkle defect in the composite workpiece.

The workpiece can generally be defined by its three principal dimensions, i.e. its longitudinal extension, its cross extension to the longitudinal extension and its thickness. Thereby, the thickness can normally be defined as that dimension in which the fibres of the workpiece are placed upon each other. The longitudinal extension need not necessarily represent a longitudinal extension of the fibres (which may also be aligned in different orientations upon each other), but rather is defined by the greatest dimension of the workpiece. For instance, a rotor blade as a workpiece of the above-mentioned kind has a longitudinal extension from a root to a tip.

Such workpiece is subjected to at least two different loads, namely to a first state of load and to a second state of load. In both these (first and second) states of load two images, a first image and a second image, of the outer surface of the workpiece are captured along a plane of the workpiece. This plane need not necessarily be flat but can also be a curved plane, as would for instance be the case when capturing the surface of a rotor blade. The two images are then compared on the basis of the two different states of load to generate the comparison value, and this comparison value is then compared with values from a database, namely so-called reference comparison values. From this comparison there is derived an evaluation value which serves as an indicator of how severe a wrinkle defect inside the workpiece is.

Thus, the invention is based on the fact that the first and second image are used to generate a comparison value which is then further processed by comparing that comparison value with a dataset from a database, namely with the set of reference comparison values. These comparison values thereby serve to supply a background knowledge of how severe a particular deformation of a surface of a workpiece of the above-mentioned kind must be rated. Therefrom, the severity of the wrinkle defect of the currently inspected workpiece can easily be derived. This means that a more exact evaluation of such wrinkle defect is possible even though the workpiece itself is only visually inspected on its surface.

As for the set of reference comparison values representing deformation characteristics of composite structures of the same kind as the composite workpiece, such same kind of composite workpiece can be characterized to be of the same or similar make as the workpiece currently under inspection. Within the database, there may be several sets of reference comparison values whereby each set refers to one particular kind of composite structure, which can be characterized by the composite structure's material, its size, its function and its location within a larger element, to name but a few characteristics. "The same kind" of composite structure thus refers to such composite structure in the database which can best be matched with the composite structure currently inspected, whereby preferably the above-mentioned characteristics (i.e. the material, size, function and location) are the same or show a high degree of similarity.

The invention is thus based on the use of some background knowledge supplied in the database referring to similar or the same composite structures as the workpiece currently under inspection. This makes the evaluation easier and also makes it possible to inspect the workpiece under any possible two different loads in comparison with the state of the art in which the workpiece is always evaluated under one state in which essentially no load is inflicted on the workpiece, i.e. in which it is in a state of essentially no strains externally imposed on it. In contrast, the method according to the invention can be used even under operation environments of the workpiece in which such workpiece is usually always under some external load of some kind.

A load in this context is defined to comprise an external force inflicted on the workpiece, directly or indirectly, which force is at least partially withheld by the structure of the workpiece. Such force is thereby preferably inflicted on the workpiece in a direction different from the thickness extension of the workpiece, i.e. at an angle, preferably an angle above 45° to the thickness of the workpiece, most preferred essentially perpendicularly to the thickness extension. It may however be noted that such angular force to the thickness extension may also be inflicted on the workpiece by inflicting a bending force on the workpiece in the direction of the thickness extension at one location which bending force bends the workpiece so that due to bending, angular forces to the bending force are actuated on the workpiece due to its internal structure.

A database is generally a data system in which a number, preferably a plurality of sets of reference comparison values is stored. Thereby, the reference comparison values can all refer to one specific composite workpiece, but preferably to a series of composite workpiece of similar kinds. They can also refer to several completely different composite workpieces, for instance of different materials and/or for different purposes. Therefore, any set of reference comparison values is linked in the database to one particular workpiece.

As for the system according to the invention, such system of the above-mentioned kind comprises at least the following elements:
- a capturing unit, for instance a number of cameras, which in operation
   a) captures a first image of an outer surface of the composite workpiece along a plane defined by the longitudinal extension and the cross extension in a first state of load on the composite workpiece,
   b) captures a second image of the outer surface of the composite workpiece along the same plane in a second state of load on the composite workpiece different from the first state of load,
- a generation unit for generating a comparison value representing a deformation of the composite workpiece between the first state of load and the second state of load,
- a comparison unit with an interface to a database, which comparison unit compares in operation the comparison value with a set of reference comparison values from the database, the set of reference comparison values representing deformation characteristics of composite structures of the same kind as the composite workpiece,
- a derivement unit realized to derive an evaluation value from the comparison which evaluation value represents the severity of the wrinkle defect in the composite workpiece.

Whereby mention is made of just one capturing unit, it is also included that such capturing unit comprises more than one subunit, whereby a first subunit captures the first image and a second subunit captures the second image.

As most of the steps of the method according to the invention can be carried out by automatic, in particular computer-based, devices, some elements of the system may be realized as software components running on a computer processor. Accordingly, interfaces may also be realized as purely software-based interfaces or a mixture of hardware- and software-based operation units. The same applies to virtually all components of the system according to the invention, in particular to the generation unit, the comparison unit, and the derivement unit.

Accordingly, the invention also conerns a computer programme product directly loadable into a memory of a programmable device comprising software code portions for performing the steps of a method according to the invention when said product is run on the programmable device.

Particularly advantageous embodiments and features of the invention are given by the dependent claims, as revealed in the following description. Thereby, features revealed in the context of the method may also be realized in the context of the system and/or of the database according to the invention unless the contrary is explicitly stated.

Preferably, the first state of load and the second state of load both are states in which external forces of different values, i.e. other values than zero are inflicted onto the composite workpiece. In other words, the workpiece is inspected under two different load conditions none of which is a state in which no load is inflicted on the workpiece. Thereby it may be marked that also the gravity force on the workpiece can be considered a state of load implying external forces, but only if the gravity force is not countered with a counterforce in the counterdirection and with the same amount of force on the workpiece. In other words: As soon as the workpiece itself has to exert counterforces through its structure against a force which is otherwise not countered, a state of load with external forces is considered to be present. Unlike in the state of the art in which the workpiece would always need to be inspected in one loaded state and in one unloaded state, the method according to the invention makes it possible to inspect it under two different loaded states. That makes it much easier to inspect the workpiece even when it is installed in an operation position, for instance a wind turbine blade installed on a hub.

It is preferred that the comparison value comprises a deformation value which represents a deformation of the composite workpiece in dependence of loads in the first and second states of loads. If the workpiece is loaded, for instance in compression, a deformation force such as a bending force is induced in the vicinity of a wrinkle defect which causes strains or stresses on the surface of the workpiece as well as on the inner side of the workpiece. Such strain or stress values can for instance be used as deformation values as they represent the tendency of the workpiece to deform in the region of the wrinkle defect. The deformation forces become larger the higher the loads are so that under any two given states of load the deformation tendency can be simulated. As the value of the measured deformation value depends on the geometrical and mechanical characteristics of the wrinkle itself, the severity of the wrinkle can be evaluated. For instance, if many layers of the composite structure are involved in the wrinkle defect and/or if the wrinkle's angle inside the composite structure is high, the strain or stress will be higher and thus the difference of strain or stress between the two different states of loads will be quite significant in comparison with a wrinkle in which less layers of the composite structure are involved and/or with a smaller wrinkle angle. The deformation value can thus indirectly characterize the quality of the wrinkle itself.

According to a particularly advantageous embodiment of the method according to the invention, if the evaluation value reaches a preset threshold value a warning signal is generated. Such threshold value is then chosen to represent a certain critical state of a wrinkle defect which implies that further measures, e.g. to physically remove the wrinkle defect, need to be taken. On the other hand, if that threshold value is not reached, the workpiece can be considered to be usable despite the wrinkle defect as this will be considered a minor or harmless wrinkle defect. Thus the threshold value is preferably chosen bearing a certain variance of measurement values and of critical states in mind.

In particular, the capturing of the first and second images can be carried out by a digital image correlation measurement system as described above. Such systems are well-established systems comprising a number of cameras and a light source connected to an evaluation logic. In the case of the present invention, such evaluation logic comprises the above-mentioned system features, including the connection to the database.

Such digital image correlation measurement system preferably comprises a handheld capturing device with a number of cameras and a light source. This has the advantage that the capturing steps of the method can be done virtually anywhere, i.e. also on site of the workpiece in an installed state.

As mentioned before, one particularly preferred application of the method concerns composite workpieces which are (part of) a rotor blade, in particular of a wind turbine. Thus, preferably the composite workpiece is comprised by a rotor blade of a wind turbine. Such rotor blades are very large and difficult to handle. At the same time, their operation must be particularly safe as failures can be critical to anyone standing in their surroundings and as defects can often also not be repaired easily, in particular in offshore conditions.

Thereby, it is particularly preferred that the evaluation is carried out while the rotor blade is in an installed state on a hub of the wind turbine. That means that the method permits to reliably evaluate a rotor blade even in operation so that repairs or exchanges really only need to be done if found necessary on the profound basis of the method according to the invention.

In this context, it has proven particularly advantageous if the first state of load and/or the second state of load is realized by the rotor blade being positioned in an essentially vertical alignment. Thereby the respective other state of load is preferably realized by the rotor blade being positioned in a different alignment than the vertical alignment, however, it is also possible to alter the direction of the rotor blade from upwards in one state of load to downwards in the respective other state of load. By positioning the rotor blade essentially vertically, it can be made sure that the load forces in that state of load are essentially parallel to the extension of the fibre layers in the rotor blade. Therefore, the forces are more or less exactly compression forces which are perpendicular to the thickness extension of the rotor blade. This helps to exactly define the forces in the given state of load.Generally, the rotor blade can also be placed in any other positions, whereby it is always preferred that the first state of load and the second state of load are taken in significantly different positions which are preferably at an angle of at least 10°, more preferred at an angle of at least 30°, most preferred at an angle of at least 45° from each other along a hub of the wind turbine.

According to a first variant, the set of reference comparison values in the database comprises test measurement data from composite structures of the same kind as the composite workpiece. This means that from previous tests of the same kind of composite structures as the one currently inspected or evaluated, the reference comparison values are derived. This has the advantage that the reference comparison values have been generated under real-life conditions which helps to generate very exact reference comparison values. In addition, the system according to the invention can then be realized as a self-learning system which incorporates comparison values from the current evaluation and/or later evaluation to refine its database.

According to a second variant, which can be realized alternatively or additionally to the first variant, the set of reference comparison values in the database comprises simulation data from simulations of expected behaviours of the composite workpiece under different states of loads. In particular, such simulation data can be generated by using finite element modelling, which effectively provides for very exact simulation data. Simulation has the advantage of a very reduced amount of necessary effort as instead of using a lot of real-life measurements the database can be supplied purely by means of computational power using refined simulation methods.

Preferably, the set of reference comparison values is further linked to a set of wrinkle defect characteristics diagnoses and the evaluation value resulting from the deriving step e) comprises at least one diagnosis out of the set of wrinkle defect characteristics diagnoses. This way there is a virtually direct way from the comparison value via the database records to a diagnosis of a wrinkle defect of the workpiece.

The database for support of an evaluation of a wrinkle defect in a fibre reinforced composite workpiece preferably comprises a medium on which there is supplied a number of sets of reference comparison values, a set of reference comparison values representing deformation characteristics of composite structures of a number of kinds of composite workpiece, each reference comparison value representing a defect severity value of a specimen wrinkle defect in a specimen composite structure and at least one of the following values:
- a material property value of a specimen composite structure
- a composite geometry value of the specimen composite structure,
- a location value of a location of the specimen composite structure within a product,
- a geometry value of the specimen wrinkle defect.

Preferably, all these above-mentioned values are represented by each reference comparison value so that an overall broad picture of the specimen and the specimen wrinkle defect is obtained.

Other objects and features of the present invention will become apparent from the following detailed descriptions considered in conjunction with the accompanying drawings. It is to be understood, however, that the drawings are designed solely for the purposes of illustration and not as a definition of the limits of the invention.

In the drawings, like reference numbers refer to like objects throughout. Objects in the diagrams are not necessarily drawn to scale.
Fig. 1 shows a cross sectional view of a fibre reinforced composite workpiece to be inspected using a method according to the invention,
Fig. 2 shows a DIC picture of the same composite workpiece,
Fig. 3 shows a schematic representation of the fibre reinforced composite workpiece of Figs. 2 and 3,
Fig. 4 shows the top layer of the composite workpiece of Fig. 3,
Fig. 5 shows a three-dimensional DIC picture of the composite workpiece of the previous figures,
Fig. 6 shows a schematic view of a wind turbine in a first state and a system according to an embodiment of the invention,
Fig. 7 shows the same wind turbine as in Fig. 6 in a second state and the same system as in Fig. 6,
Fig. 8 shows a schematic more detailed block view of the system of Figs. 6 and 7,
Fig. 9 shows a schematic block diagram of an embodiment of the method according to the invention,
Fig. 10 shows a schematic data input scheme into a database for use in the context of the invention.

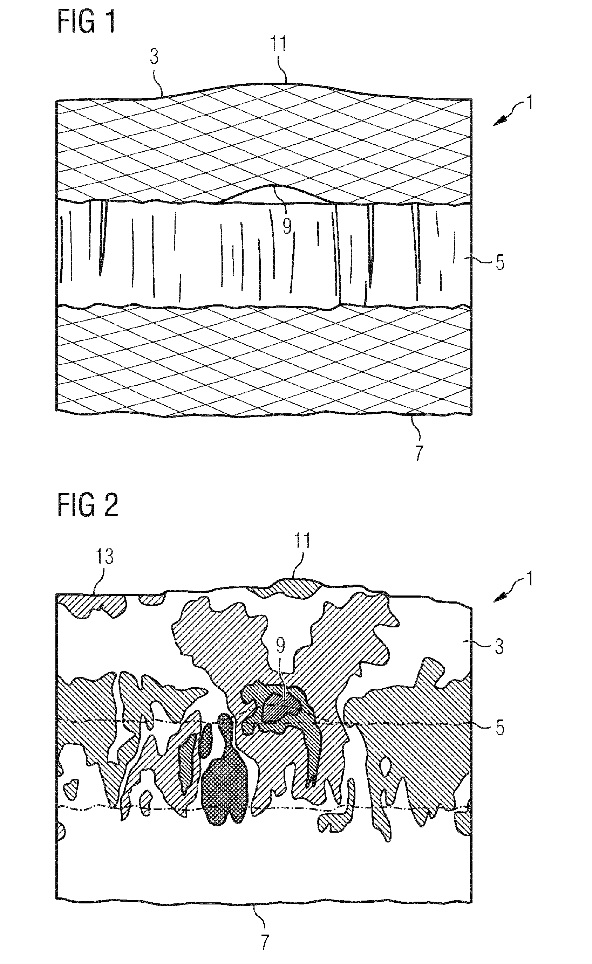

Figs. 1 and 2 show a composite workpiece 1 to be inspected by a method according to the invention. It comprises a first, upper layer 3 of fibre reinforced material and a second, lower layer 7 of fibre reinforced material and in between those a solid middle layer 5, in this case a middle layer 5 of balsa wood. The composite workpiece 1 is part of a rotor blade (not shown) of a wind turbine.

On an outer surface of the composite workpiece 1 a hill 11 is caused due to a wrinkle defect 9 within the first layer 3 of fibre reinforced material. This wrinkle defect 9 is positioned in between the middle layer and the first layer 3 of fibre reinforced material.

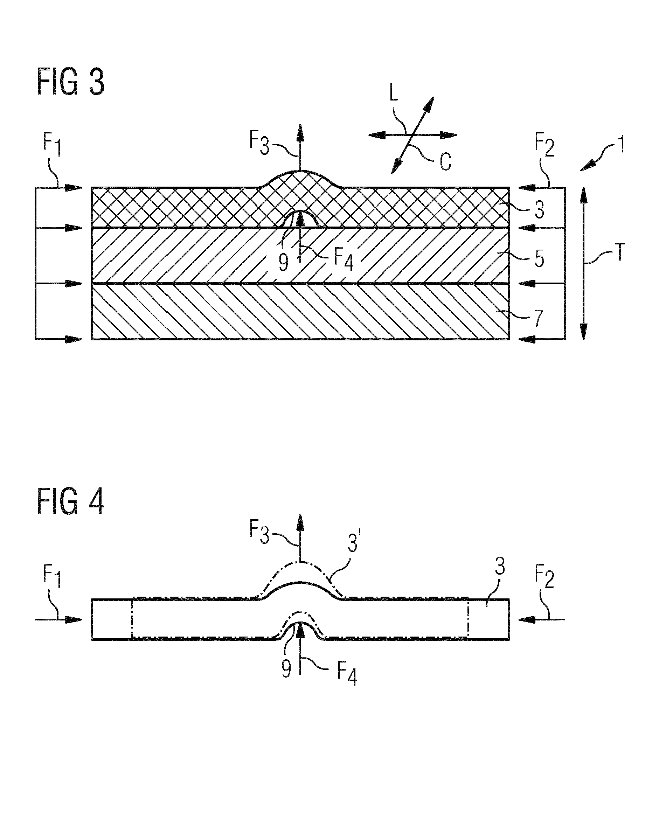

When inspecting this cross section by the digital image correlation (DIC) method as described in the introduction, regions of higher and lower compression can be found both within the first layer 3, the middle layer 5 and even into the second layer 7. For instance, at the left hand side right on the outer surface of the workpiece 1 there can be observed a region 13 of higher compression whereas the hill 11 itself constitutes a region of tension. These compressional and tensional forces are further explained along Figs. 3 and 4.

Fig. 3 shows a schematic view of the composite workpiece 1. Thereby, longitudinal forces F₁, F₂ are applied to the composite workpiece 1 from either longitudinal ends along the longitudinal extension L of the workpiece. A cross extension C of the composite workpiece 1 is perpendicular to the longitudinal extension L and schematically depicted here. The cross extension C is also perpendicular to the thickness T of the composite workpiece 1.

Due to the wrinkle defect 9 in the first layer 3 a tension force F₃ at the outer surface of the composite workpiece 1 and a compression force F₄ at the location of the wrinkle defect 9 occur. This is further depicted in more detail in Fig. 4 where the deformation tendency of the first layer 3 towards a position 3' can be seen. Therefore, the tension and compression forces F₃ and F₄ represent deformation values which can be used in the context of the invention.

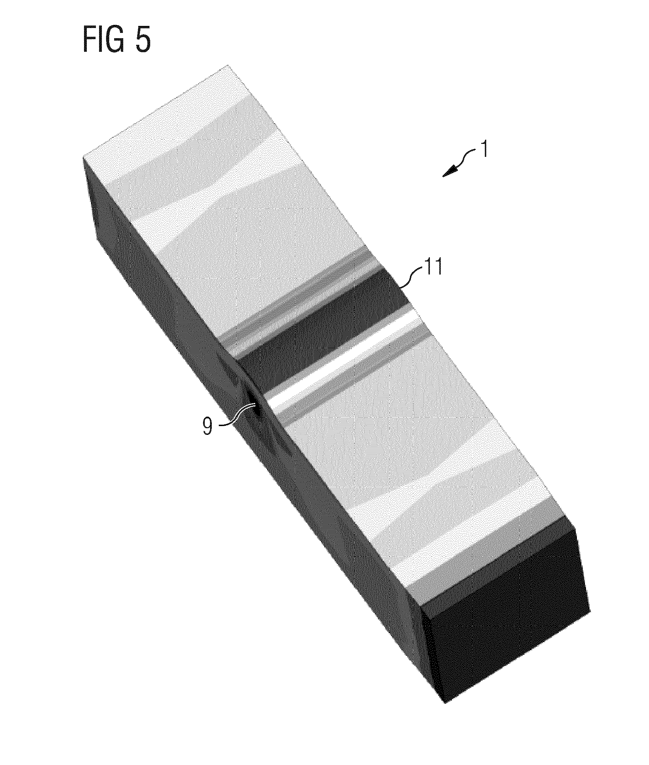

Fig. 5 depicts a cut-out part of the same composite workpiece 1 in a perspective view from above, again shown as a result of DIC measurement. The different regions of compression and tensions are thereby encoded by greyscales, which represent colour scales which are usually used in DIC pictures.

Under two different loads the compressions and tensions will vary so that the grey codes will be different. Thereby the difference of strains or stress in dependence of the loads applied to the composite workpiece 1 represents the geometry of the wrinkle defect 9. Namely, the value of the difference of strains or stresses under the two different loads depends on the geometrical and mechanical characteristics of the wrinkle defect 9. The difference under the two different loads can thus be correlated to the quality of the wrinkle defect 9.

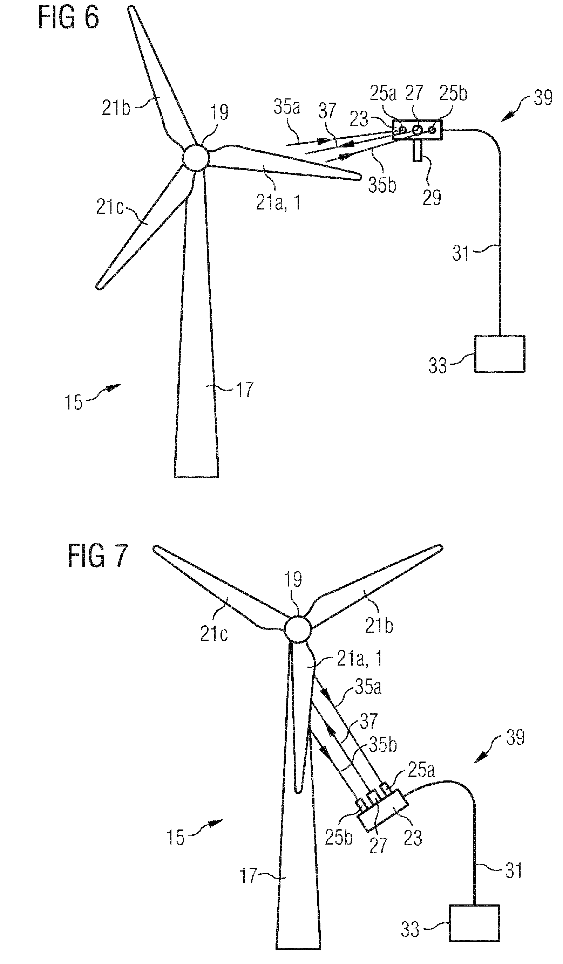

The method and system according to the invention are now described along Figs. 6 to 10.

Figs 6 and 7 show a wind turbine 15 with a tower 17 and with rotor blades 21a, 21b, 21c in two different states, i.e. positions. As a composite workpiece 1 to be evaluated with respect to wrinkle defects 9, a first rotor blade 21a is used by way of an example.

In Fig. 6, the first rotor blade 21a is in an essentially horizontal position. Therefore, gravity forces the first rotor blade 21a downwards. Taking the condition of a windless environment the gravity force is in fact the only relevant force in this scenario. As the gravity force is withheld by the installation of the first rotor blade 21a on the hub 19 of the wind turbine 15 the first rotor blade 21a will be forces downwards at its outer end, i.e. its tip which is farthest away from the hub and the tower. Therefore, a bending force is applied over the whole longitudinal extension of the first rotor blade 21a which bending force results in longitudinal forces all along the first rotor blade 21a. These longitudinal forces can be seen as similar to the forces F₁, F₂ of Figs. 3 and 4.

In Fig. 7, the longitudinal forces within the first rotor blade 21a are different as the gravity force itself can be considered equal to be the longitudinal forces. Therefore, the first rotor blade 21a is under two different states of load in these two figures, both of which states of load have loads, i.e. an infliction of longitudinally directed forces, which are not zero.

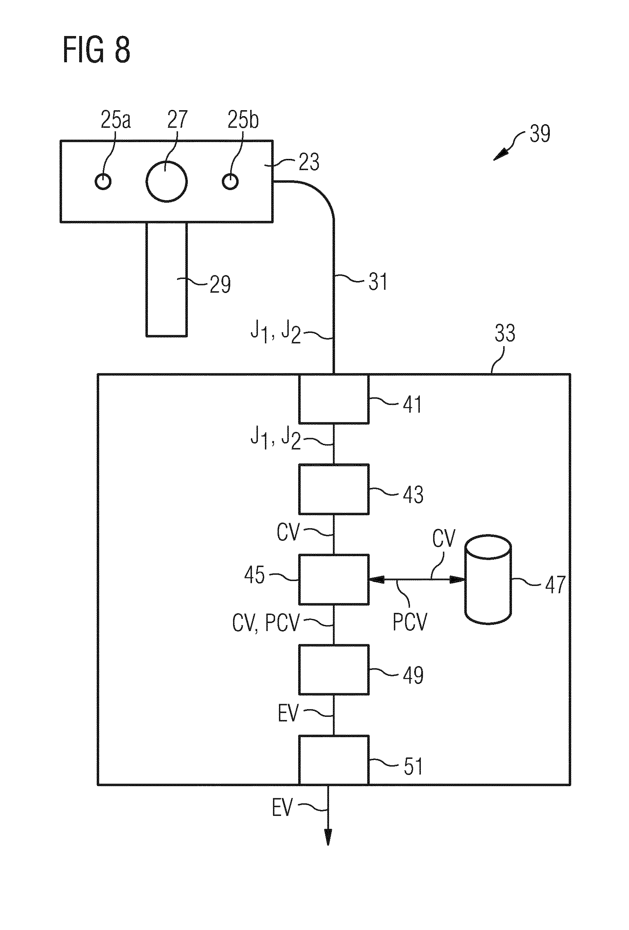

A system 39 according to an embodiment of the invention is used to evaluate a wrinkle defect (not shown) in the first rotor blade 21a. Reference is also made to Fig. 8 in this context:
The system 39 comprises a handheld DIC system 23 with a handle 29 and two cameras 25a, 25b and a light source 27, namely a laser light source 27. Via a connection 31 the handheld DIC system 23 is connected to a central unit 33. The central unit 33 comprises an input interface 41, a generation unit 43, a comparison unit 45 which is connected via an interface (not shown) to a database 47, a derivement unit 49 and an output interface 51.

Returning to Figs. 6 and 7, the light source 27 emits light 37 in the direction of the first rotor blade 21a and the two cameras 25a, 25b receive light reflections 35a, 35b from this input of light 37 from the outer surface of the first rotor blade 21a.

Two different images J₁, J₂ of the surface of the first rotor blade 21a are captured, a first image J₁ in the first state of load in the first position of the first rotor blade 21a as depicted in Fig. 6 and a second image J₂ in the second state of load in the second position of the first rotor blade 21a as depicted in Fig. 7.

These two images J₁, J₂ are input via the input interface 41 into the central unit 33 where they are processed further:
The generation unit 43 generates therefrom a comparison value CV which represents a deformation of the first rotor blade 21a between the first state of load and the second state of load. This comparison value CV is compared in the comparison unit 45 with a set of reference comparison values PCV from the database 47. This set of reference comparison values PCV represents deformation characteristics of composite structures of the same kind as the first rotor blade 21a. From this information the derivement unit 49 derives an evaluation value EV which represents the severity of the wrinkle defect in the first rotor blade 21a.

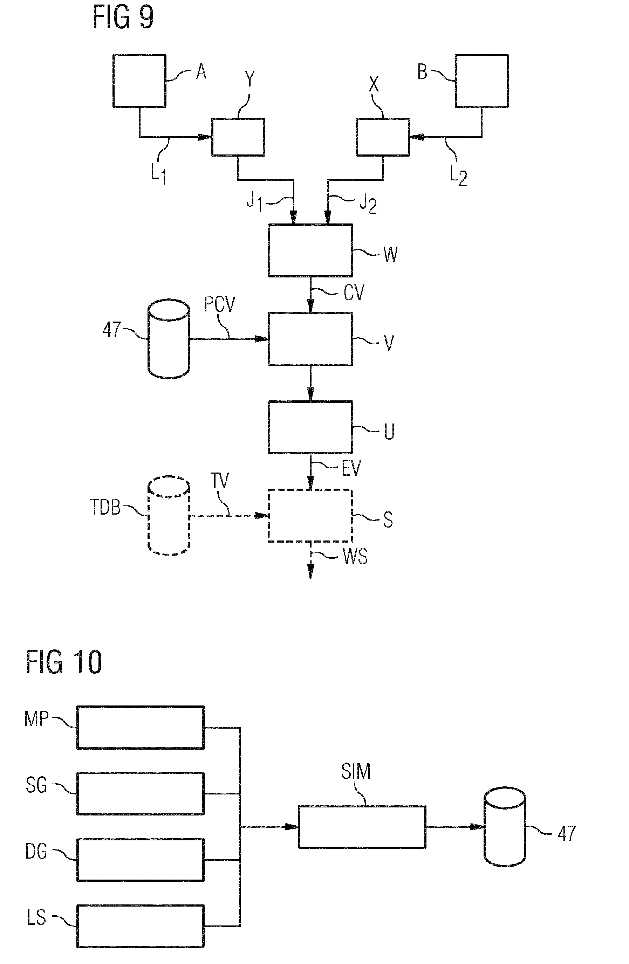

Fig. 9 shows the succession of steps of a method Z according to an embodiment of the invention with reference to the previous figures. In a first step A the composite workpiece 1 is put into a first state of load L₁ and then in step Y the first image J₁ is captured of the surface of the workpiece 1. Accordinly, in a second step B the composite workpiece 1 is put into a second state of load L₂ and then in step X the second image J₂ is captured of the surface of the workpiece 1.

The two images J₁, J₂ are then used in a generating step W to generate the comparison value CV which is then compared in a comparison step V to the set of reference comparison values PCV from the database 47. In a derivement step U the evaluation value EV is derived from that comparison. Optionally, a threshold value database TDB is used which supplies a threshold value TV. If the evaluation value EV reaches that threshold value in a threshold step S a warning signal WS is output which warns a user of a potentially severe wrinkle defect.

Fig. 10 shows a schematic input scheme into the database 47.

The database 47 is realized such that for each input of variables MP, SG, DG, LS, SIM a new relationship between surface strains is calculated and generated. For that purpose, the database receives input from a simulation step SIM in which based on input variables MP, SG, DG, LS a simluation is carried out referring to specimens of composite workpieces with wrinkle defects.

The input variables MP, SG, DG, LS comprise:
- a material property value MP which represents specific properties of the material of specimen workpieces ,
- a composite geometry value SG of the specimen workpiece's composite structure, for instance its overall size, the thickness of its fibre layers the thickness of an inner core (such as the third layer 5 shown in Figs. 1 to 3) etc.,
- a geometry value DG of the specimen's wrinkle defect, which may for instance include information about the number of fibre layers involved in the wrinkle defect, its misalignment angle etc.,
- a location value LS of a location of the specimen composite structure within a product. For instance the location of the composite structure in a wind turbine blade has significant impact on the composition of loads acting on the specimen composite structure.

These input variables MP, SG, DG, LS are preferably all input, but at least one of the is necessary. They are brought into a relation with a defect severity value of a specimen wrinkle defect so that in the database 47, each reference comparison value PCV represents a defect severity value of a specimen wrinkle defect in a specimen composite structure and at least one of the above-mentioned input values MP, SG, DG, LS.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements.

## Claims

1. Method (Z) of evaluation of a wrinkle defect (9) in a fibre reinforced composite workpiece (1, 21a) with a longitunal extension (L) and a cross extension (C) to the longitudinal extension (L) and a thickness (T) which is essentially perpendicular to the longitudinal extension (L) and the cross extension (C), comprising the steps of:
a) capturing (Y) a first image (J₁) of an outer surface of the composite workpiece (1, 21a) along a plane defined by the longitudinal extension (L) and the cross extension (C) in a first state of load (L₁) on the composite workpiece (1, 21a),
b) capturing (X) a second image (J₂) of the outer surface of the composite workpiece (1, 21a) along the same plane in a second state of load (L₂) on the composite workpiece (1, 21a) different from the first state of load (L₁),
c) generating (W) a comparison value (CV) representing a deformation of the composite workpiece (1, 21a) between the first state of load (L₁) and the second state of load (L₂),
d) comparing (V) the comparison value (CV) with a set of reference comparison values (PCV) from a database (47), the set of reference comparison values (PCV) representing deformation characteristics of composite structures of the same kind as the composite workpiece (1, 21a),
e) deriving (U) an evaluation value (EV) from the comparison which evaluation value (EV) represents the severity of the wrinkle defect (9) in the composite workpiece (1, 21a).

2. Method according to claim 1, whereby the first state of load (L₁) and the second state of load (L₂) both are states in which external forces (F₁, F₂) of different values are inflicted onto the composite workpiece (1, 21a).

3. Method according to claim 1 or 2, whereby the comparison value (CV) comprises a deformation value which represents a deformation of the composite workpiece (1, 21a) in dependence of loads in the first and second states of loads (L₁, L₂).

4. Method according to any one of the preceding claims, whereby if the evaluation value (EV) reaches a preset threshold value (TV) a warning signal (WS) is generated.

5. Method according to any one of the preceding claims, whereby the capturing (Y, X) of the first and second images (J₁, J₂) is carried out by a digital image correlation measurement system (23).

6. Method according to claim 5, whereby the digital image correlation measurement system (23) comprises a handheld capturing device with a number of cameras (25a, 25b) and a light source (27).

7. Method according to any one of the preceding claims, whereby the composite workpiece (1) is comprised by a rotor blade (21a) of a wind turbine (15).

8. Method according to claim 7, whereby the evaluation (Z) is carried out while the rotor blade (21a) is in an installed state on a hub (19) of the wind turbine (15).

9. Method according to claim 8, whereby the first state of load (L₁) and/or the second state of load (L₂) is realized by the rotor blade (21a) being positioned in an essentially vertical alignment.

10. Method according to any one of the preceding claims, whereby the set of reference comparison values (PCV) in the database (47) comprises test measurement data from composite structures of the same kind as the composite workpiece (1, 21a) .

11. Method according to any one of the preceding claims, whereby the set of reference comparison values (PCV) in the database (47) comprises simulation data from simulations of expected behaviours of the composite workpiece under different states of loads.

12. Method according to any one of the preceding claims, whereby the set of reference comparison values (PCV) is linked to a set of wrinkle defect characteristics diagnoses and the evaluation value (EV) resulting from the deriving (U) step e) comprises at least one diagnosis out of the set of wrinkle defect characteristics diagnoses.

13. System (39) for evaluation of a wrinkle defect (9) in a fibre reinforced composite workpiece (1, 21a) with a longitunal extension (L) and a cross extension (C) to the longitudinal extension (L) and a thickness (T) which is essentially perpendicular to the longitudinal extension (L) and the cross extension (C), comprising:
- a capturing unit (25a, 25b) which in operation
a) captures a first image (J₁) of an outer surface of the composite workpiece (1, 21a) along a plane defined by the longitudinal extension (L) and the cross extension (C) in a first state of load (L₁) on the composite workpiece (1, 21a),
b) captures a second image (J₂) of the outer surface of the composite workpiece (1, 21a) along the same plane in a second state of load (L₂) on the composite workpiece (1, 21a) different from the first state of load (L₁),
- a generation unit (43) for generating a comparison value (CV) representing a deformation of the composite workpiece (1, 21a) between the first state of load (L₁) and the second state of load (L₂),
- a comparison unit (45) with an interface to a database (47), which comparison unit (45) compares in operation the comparison value (CV) with a set of reference comparison values (PCV) from the database (47), the set of reference comparison values (PCV) representing deformation characteristics of composite structures of the same kind as the composite workpiece (1, 21a),
- a derivement unit (49) realized to derive an evaluation value (EV) from the comparison (V) which evaluation value (EV) represents the severity of the wrinkle defect (9) in the composite workpiece (1, 21a).

14. Computer programme product directly loadable into a memory of a programmable device (33) comprising software code portions for performing the steps of a method according to any one of claims 1 to 12 when said product is run on the programmable device (33).
